# EUROPÄISCHE PATENTANMELDUNG

(11) **EP 1 457 650 A2**
(43) Veröffentlichungstag der Anmeldung: **15.09.2004**
(21) Anmeldenummer: 04002667.6
(22) Anmeldetag: 06.02.2004
(51) Int. Cl.: F02B 23/08, F02B 23/10

(54) **Kraftstoffzuführsystem für eine Brennkraftmaschine**

(30) Priorität: 11.03.2003 DE 10310437
(71) Anmelder: DaimlerChrysler AG, 70567 Stuttgart (DE)
(72) Erfinder: Frey, Jürgen, 73728 Esslingen (DE); Karl, Günter, Dr., 73732 Esslingen (DE); Krämer, Stephan, Dr., 71409 Schwaikheim (DE)

(57) **Zusammenfassung**

Es wird ein Kraftstoffzuführsystem für eine Brennkraftmaschine eines Kraftfahrzeugs vorgeschlagen, mit mindestens einem in oder an einem Zylinderkopf (1) angeordneten Direkteinspritzventil (2), dem Kraftstoff unter Druck zugeführt wird, um mittels des Direkteinspritzventils Kraftstoff direkt in einen Brennraum (3) der Brennkraftmaschine abzugeben, und mindestens einem Zusatzeinspritzventil (17) in einem Ansaugbereich (18) der Brennkraftmmaschine zur zusätzlichen Kraftstoffabgabe (19) in einen Luftstrom (16) in einem Ansaugrohr (13) der Brennkraftmaschine, wobei das Direkteinspritzventil (2) und das Zusatzeinspritzventil (17) einem gemeinsamen Steuergerät (23) zugeordnet und aufeinander abgestimmt freigebbar sind. Erfindungsgemäß ist bei dem Kraftstoffzuführsystem vorgesehen, dass dass das Zusatzeinspritzventil (17) derart ausgebildet und/ oder angeordnet ist, dass das Zusatzeinspritzventil (17) den Kraftstoff (19) im wesentlichen in einer Richtung quer zu der Luftströmungsrichtung (16) im Ansaugrohr (13) einspritzt. Das Kraftstoffzuführsystem findet Anwendung in Kraftfahrzeugen, insbesondere in Personenkraftwagen.

## Beschreibung

Die Erfindung betrifft ein Kraftstoffzuführsystem für eine Brennkraftmaschine nach dem Oberbegriff des Anspruchs 1.

Aus dem Stand der Technik sind bereits Kraftstoffzuführsysteme bekannt, die eine an einem Zylinderkopf angebrachte Verteilerleiste besitzen, in welcher Kraftstoff unter Druck zu im Zylinderkopf untergebrachten Direkteinspritzventilen geführt wird. Jedes Direkteinspritzventil gibt den Kraftstoff mit relativ hohem druck in direkter weise in Form einer Kraftstoffwolke bestehend aus feinsten Tröpfchen in einen Brennraum der Brennkraftmaschine ab. Bei erforderlichen höheren Kraftstoffmengen ergibt sich aber keine vollständige Aufbereitung des vom Direkteinspritzventil abgegebenen Kraftstoffs und keine optimale Luftausnutzung im Brennraum. Dies hat zur Folge, dass es zu einem Benetzen der Zylinderinnenwände und der Kolbenfläche mit Kraftstoff kommen kann, was wiederum zu einer unvollständigen Verbrennung des Kraftstoffs im Brennraum führt, wodurch es zu einem Anstieg an schädlichen Bestandteilen im Abgas kommt. Besonders betroffen sind davon Brennkraftmaschinen, die über eine Aufladung der angesaugten Luft, zum Beispiel mittels Abgasturbolader, verfügen, da diese Brennkraftmaschinen bezogen auf das Zylindervolumen relativ hohe Einspritzmengen an Kraftstoff benötigen.

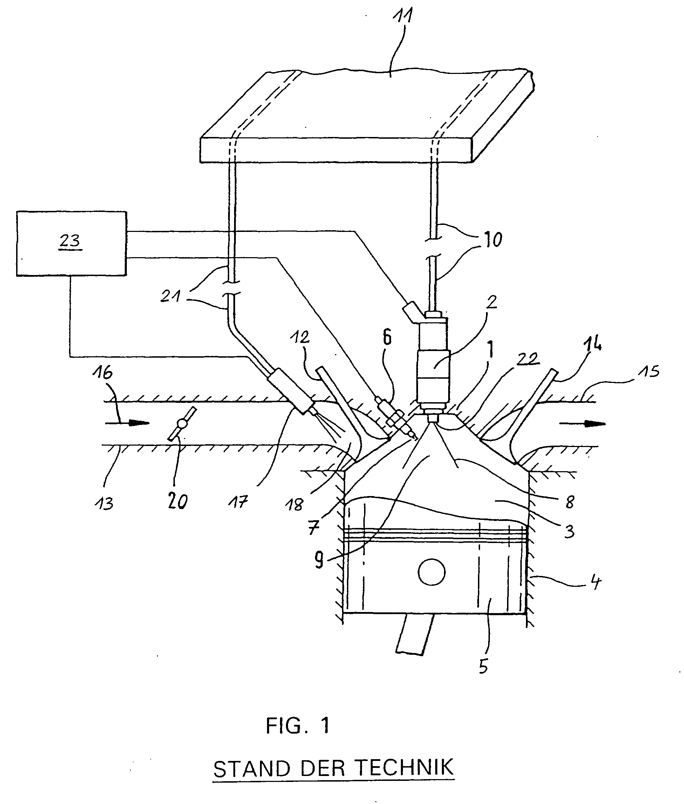

Um in sämtlichen Betriebsbereichen eine hinsichtlich Verbrauch und Abgasemission optimale Gemischaufbereitung in der Brennkraftmaschine zu erzielen, offenbart zum Beispiel die DE 199 45 544 A1 der Anmelderin ein gattungsbildendes Brennstoffzuführsystem, mit dem auch hohe Leistungen im gesamten Drehzahlbereich von der Brennkraftmaschine bereitgestellt werden können, ohne dabei den Anteil an schädlichen Bestandteilen im Abgas wesentlich zu erhöhen. Der Aufbau dieses Kraftstoffzuführsystems ist schematisch in Fig. 1 dargestellt und wird weiter unten näher erläutert.

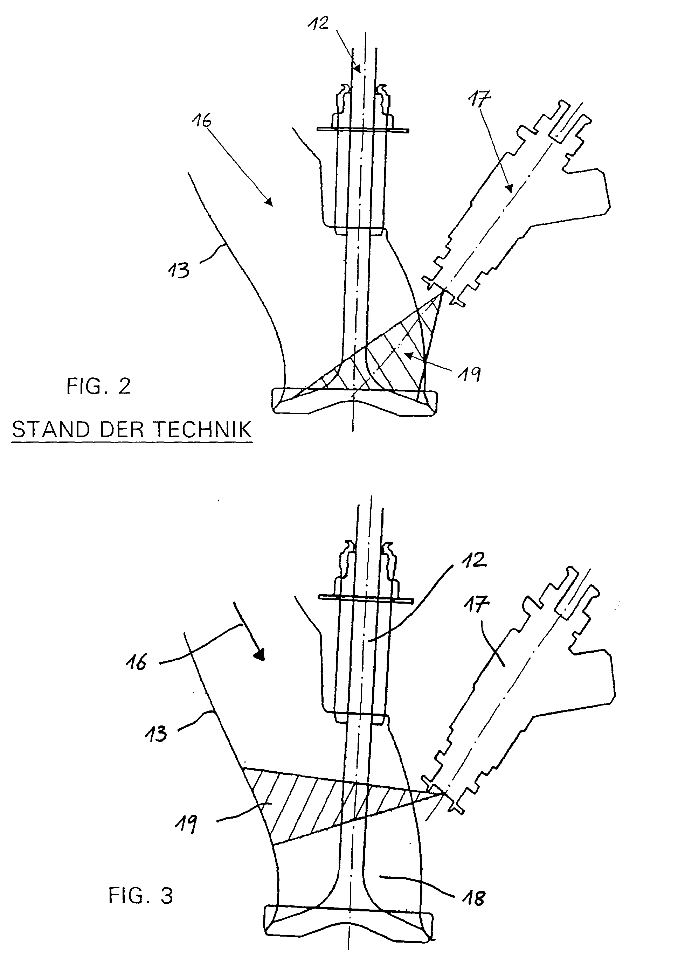

Dieses bekannte Kraftstoffeinspritzsystem bietet die Möglichkeit, den zur Gemischbildung erforderlichen Kraftstoff neben der direkten Abgabe in den Brennraum mittels der Direkteinspritzung (in der Ausführungsform von Fig. 2) zusätzlich über den Ansaugbereich der Brennkraftmaschine zuzuführen. Eine Steuereinheit steuert dabei das dem Brennraum zugeordnete Direkteinspritzventil und das zusätzliche Einspritzventil im Ansaugbereich in Abhängigkeit des Betriebsbereiches der Brennkraftmaschine und bestimmt deren jeweiligen Durchsatz. Besonders zweckmäßig wird dabei die zusätzliche Kraftstoffabgabe und Zuführung über den Ansaugbereich im wesentlichen im höheren Lastbereich der Brennkraftmaschine vorgesehen. Die zur direkten Kraftstoffzufuhr in den Brennraum erforderlichen Bauteile des Kraftstoffzuführsystems können dabei vorteilhaft auf geringere Gesamtmassendurchsätze bei Vollast ausgelegt werden als dies bisher bei ausschließlicher Direkteinspritzung der Fall war.

Bei den derzeit bekannten Kraftstoffzuführsystemen dieser Art erfolgt die Platzierung und kalibrierung der Einspritzventile unter Berücksichtigung eines guten Startverhaltens mit niedriger Abgasemission, eines guten Instationärverhaltens und einer guten homogenen Gemischbildung während des Motorbetriebs. Dies führt zwangsläufig zu Kompromisslösungen, insbesondere hinsichtlich der Anordnung des Einspritzventils im Ansaugrohr. Wie in Fig. 2 exemplarisch dargestellt, wird der Kraftstoff 19 aus dem Einspritzventil 17 im wesentlichen geradlinig in das Ansaugrohr 13 eingespritzt, wobei der Kraftstoff hauptsächlich in Richtung auf das Einlassventil 12 gerichtet ist.

Ausgehend von diesem Stand der Technik ist es eine Aufgabe der vorliegenden Erfindung, ein Kraftstoffzuführsystem der eingangs genannten Art derart weiterzuentwickeln, dass die homogene Gemischbildung und damit automatisch auch der Kraftstoffverbrauch und die Abgasemission weiter optimiert wird, ohne das Start- und das Instationärverhalten der brennkraftmaschine zu verschlechtern.

Diese Aufgabe wird durch ein Kraftstoffzuführsystem mit den Merkmalen des Anspruchs 1 gelöst.

Das erfindungsgemäße Kraftstoffzuführsystem zeichnet sich dadurch aus, dass das Zusatzeinspritzventil derart ausgebildet und/oder angeordnet ist, dass das Zusatzeinspritzventil den Kraftstoff im wesentlichen in einer Richtung quer zu der Luftströmungsrichtung im Ansaugrohr einspritzt.

Diese konstruktive Maßnahme bewirkt, dass bei Motorbetrieb die Scherkräfte der einströmenden Luft oder des Luft/Abgasgemisches sehr vorteilhaft für eine gute homogene Gemischbildung mit den damit verbundenen Vorteilen im Kraftstoffverbrauch und in der Abgasemission genutzt werden können.

In vorteilhafter Ausgestaltung der Erfindung ist eine Einspritzdüse des Zusatzeinspritzventils derart ausgebildet und/oder das Zusatzeinspritzventil bezüglich des Ansaugrohres derart orientiert, dass das Zusatzeinspritzventil den Kraftstoff in der gewünschten Richtung im wesentlichen quer zu der Luftströmungsrichtung im Ansaugrohr einspritzt.

In einer weiteren Ausgestaltung der Erfindung ist pro Zylinder der Brennkraftmaschine jeweils ein Zusatzeinspritzventil vorgesehen (Multipoint-Einspritzung). Alternativ kann für alle oder zumindest für mehrere Zylinder der Brennkraftmaschine ein gemeinsames Zusatzeinspritzventil vorgesehen sein (Singlepoint-Einspritzung).

Weitere Merkmale und Merkmalskombinationen sowie Vorteile ergeben sich aus der Beschreibung sowie den Zeichnungen. Ein konkretes Ausführungsbeispiel der Erfindung ist in den Zeichnungen vereinfacht dargestellt und in der nachfolgenden Beschreibung näher erläutert. Es zeigen
- Fig. 1: einen teilweisen Schnitt einer Brennkraftmaschine mit einem herkömmlichen Kraftstoffzuführsystem;
- Fig. 2: einen vergrößerten Ausschnitt des Kraftstoffzuführsystems von Fig. 1 mit einem herkömmlichen Zusatzeinspritzventil; und
- Fig. 3: eine Anordnung eines Zusatzeinspritzventil im Ansaugrohr gemäß der vorliegenden Erfindung, die in dem Kraftstoffzuführsystem von Fig. 1 eingesetzt werden kann.

Fig. 1 zeigt zunächst einen Schnitt durch eine herkömmliche Brennkraftmaschine, bei der vorteilhafterweise auch die später anhand von Fig. 3 erläuterte Anordnung eines Zusatzeinspritzventils gemäß der vorliegenden Erfindung eingesetzt werden kann.

Die Brennkraftmaschine besitzt einen Zylinderkopf 1, in welchem ein Direkteinspritzventil 2 untergebracht ist. Das Direkteinspritzventil 2 gibt den Kraftstoff mit relativ hohem Druck von etwa 70 bar oder mehr in direkter Weise aus einer Austrittsöffnung 22 in Form einer Kraftstoffwolke bestehend aus feinsten Tröpfchen in den Brennraum 3 eines Zylinders 4 der Brennkraftmaschine ab. In dem Zylinder 4 ist in bekannter Weise ein Kolben 5 bewegbar untergebracht. Die Zündung des in den Brennraum 3 eingebrachten Kraftstoffs erfolgt in bekannter Weise über eine Zündkerze 6. Die Zündelektroden 7 der Zündkerze 6 befinden sich dabei in unmittelbarer Nähe eines äußeren Randes 8 eines vom Direkteinspritzventil 2 abgegebenen Kegelstrahls 9 oder teilweise in dem Kegelstrahl 9. Bei dem Kegelstrahl 9 kann es sich um einen Hohlkegelstrahl oder um einen Vollkegelstrahl handeln.

Das Direkteinspritzventil kann dabei elektromagnetisch oder piezoelektrisch betätigbar sein. Der Aufbau und die Wirkungsweise derartiger Ventile 2 ist dem Fachmann zum Beispiel aus der DE 195 48 526 A1 bekannt. Es ist auch möglich, im Unterschied zur Darstellung in Fig. 1 das Direkteinspritzventil 2 nicht zentral, sondern in seitlicher Lage anzuordnen, sodass eine seitliche Einspritzung in den Brennraum 3 erfolgt. Die Zündkerze 6 befindet sich dabei dann zum Beispiel in zentraler, insbesondere senkrechter Lage im Brennraum 3.

Die Kraftstoffzufuhr zu dem Direkteinspritzventil 2 erfolgt an einem Kraftstoffanschluss 10 des Direkteinspritzventils 2 zum Beispiel über einen Verteiler 11 (Common-Rail). In den Verteiler 11 wird über eine Kraftstoffpumpe (nicht dargestellt) Kraftstoff aus einem Kraftstofftank (nicht dargestellt) gefördert.

Der Brennraum 3 wird von dem Kolben 5 und dem Zylinderkopf 1 begrenzt. Über beispielsweise ein einzelnes Einlassventil 12 der Brennkraftmaschine wird beim Ansaugtakt Luft 16 aus einem Ansaugrohr 13 in den Brennraum 3 angesaugt. Nach der Verbrennung werden die Abgase über zum Beispiel ein einzelnes Auslassventil 14 in ein Abgasrohr 15 abgegeben. Selbstverständlich können auch zwei oder mehr Einlassventile 12 und zwei oder mehr Auslassventile 14 pro Zylinder 4 vorgesehen sein.

Bei der Brennkraftmaschine kann es sich um eine aufgeladene Brennkraftmaschine handeln, bei welcher Luft 16 unter Druck in das Ansaugrohr 13 der Brennkraftmaschine gefördert wird. Hierzu kann beispielsweise ein Abgasturbolader verwendet werden.

Die Brennkraftmaschine weist zumindest ein Zusatzeinspritzventil 17 auf, das Kraftstoff 19 in einen Ansaugbereich 18 der Brennkraftmaschine abgeben kann. Bei dem Zusatzeinspritzventil 17 kann es sich um ein konventionelles, beispielsweise elektromagnetisch betätigbares Niederdruck-Einspritzventil bekannter Bauart handeln. Der Ansaugbereich 18 wird vom Inneren des Ansaugrohres 13 gebildet, in welchem Luft 16 und der vom Zusatzeinspritzventil 17 abgegebene Kraftstoff 19 bei offenem Einlassventil 12 in den Brennraum 3 strömen können. Wie in Fig. 2 dargestellt, wird der Kraftstoff 19 in herkömmlichen Systemen vom Zusatzeinspritzventil 17 in Richtung des Einlassventils 12 der Brennkraftmaschine abgegeben.

Das Zusatzeinspritzventil 17 ist beispielsweise stromab einer drehbar in dem Ansaugrohr 13 angeordneten Drosselklappe 20 vorgesehen und ist zur Kraftstoffversorgung über seinen Kraftstoffanschluss 21 beispielsweise auch an den Verteiler 11 angeschlossen. Es ist möglich, für jeden Zylinder 4 der Brennkraftmaschine jeweils ein Zusatzeinspritzventil 17 vorzusehen. Diese können direkt in den Einlasskanälen angeordnet sein. Dem Fachmann ist diese Einspritzweise unter dem Begriff der Multipoint-Einspritzung hinreichend bekannt. Möglich ist aber auch, nur ein einzelnes Zusatzeinspritzventil 17 für alle oder zumindest für eine Teilanzahl der Zylinder 4 einer mehrzylindrigen Brennkraftmaschine vorzusehen. Das Zusatzeinspritzventil 17 gibt dabei den Kraftstoff stromauf einer Verzweigung des Ansaugrohres 13 für die einzelnen Zylinder 4 in das noch unverzweigte Ansaugrohr 13 ab, der sich anschließend in den Verzweigungen auf die einzelnen Zylinder 4 gleichmäßig aufteilt. Dem Fachmann ist diese Einspritzweise unter dem Begriff der Singlepoint-Einspritzung hinreichend bekannt.

Die Abgabe von zusätzlichem Kraftstoff mittels des Zusatzeinspritzventils 17 ist im wesentlichen im oberen Teillastbereich bis einschließlich der Vollast der Brennkraftmaschine vorgesehen. Die zusätzliche Abgabe von Kraftstoff kann über den gesamten Drehzahlbereich der Brennkraftmaschine durchgeführt werden, sobald höhere Lasten von der Brennkraftmaschine abverlangt werden. Über ein elektronisches Steuergerät 23 kann die Steuerung der Kraftstoffabgabe des Zusatzeinspritzventils 17 und des Direkteinspritzventils 2 abhängig von Betriebsparametern der Brennkraftmaschine durchgeführt werden. Es ist aber grundsätzlich auch möglich, zeitweise einen alleinigen Betrieb der Brennkraftmaschine durch Abgabe von Kraftstoff mittels des Zusatzeinspritzventils 17 durchzuführen.

Bezüglich weiterer Erläuterungen der kombinierten Kraftstoffeinspritzung mittels Direkteinspritzventil 2 und Zusatzeinspritzventil 17 im Ansaugrohr 13 wird der Einfachheit halber auf die bereits genannte DE 199 45 544 A1 verwiesen.

Anhand von Fig. 3 wird nun die erfindungsgemäße Anordnung und Ausbildung des Zusatzeinspritzventils 17 näher erläutert.

Wie in Fig. 3 dargestellt, ist das Zusatzeinspritzventil 17 derart ausgebildet und/oder angeordnet, dass das Zusatzeinspritzventil 17 den Kraftstoff 19 im wesentlichen in einer Richtung quer zur der Luftströmungsrichtung 16 im Ansaugrohr 13 einspritzt. Dies kann zum Beispiel dadurch erfolgen, dass eine Einspritzdüse des Zusatzeinspritzventils 17 derart ausgebildet ist und/oder dass das Zusatzeinspritzventil 17 bezüglich des Ansaugrohres 13 derart orientiert ist, dass das Zusatzeinspritzventil 17 den Kraftstoff in der gewünschten Richtung im wesentlichen quer zu der Luftströmungsrichtung 16 im Ansaugrohr 13 einspritzt.

Der Vorteil der in Fig. 3 gezeigten Einspritzung des Kraftstoffs 19 besteht darin, dass bei Motorbetrieb die Scherkräfte der einströmenden Luft 16 oder eines Luft/Abgasgemisches in vorteilhafter Weise für eine verbesserte Gemischbildung genutzt werden können.

Der Betrieb der Brennkraftmaschine mit der kombinierten Kraftstoffeinspritzung gemäß der Erfindung ist wie folgt. Der Start der Brennkraftmaschine wird entweder komplett durch Direkteinspritzung oder in einer Kombination aus Direkteinspritzung und Zusatzeinspritzung durchgeführt. Da somit beim Start keine oder nur eine sehr geringe Kraftstoffmenge im Ansaugrohr vorhanden sein muss, sind auch die Anforderungen an die Platzierung der Einspritzdüse geringer.

Da die Direkteinspritzung quasi während des kompletten Motorbetriebs aktiviert ist, können gegebenenfalls auch die Dynamikanforderungen der Zusatzeinspritzung im Vergleich zu dem herkömmlichen reduziert werden. Dies kann zum Beispiel bei einer Lasterhöhung durch eine spontane, möglicherweise auch nur kurzzeitige Mengenanhebung der Ditrekteinspritzung, im Fall einer Lastabsenkung zum Beispiel durch geringere Anteile des Kraftstoffs im Ansaugrohr geschehen.

## Patentansprüche

1. Kraftstoffzuführsystem für eine Brennkraftmaschine, mit mindestens einem in oder an einem Zylinderkopf (1) angeordneten Direkteinspritzventil (2), dem Kraftstoff unter Druck zugeführt wird, um mittels des Direkteinspritzventils Kraftstoff direkt in einen Brennraum (3) der Brennkraftmaschine abzugeben, und
mindestens einem Zusatzeinspritzventil (17) in einem Ansaugbereich (18) der Brennkraftmmaschine zur zusätzlichen Kraftstoffabgabe (19) in einen Luftstrom (16) in einem Ansaugrohr (13) der Brennkraftmaschine,
wobei das Direkteinspritzventil (2) und das Zusatzeinspritzventil (17) einem gemeinsamen Steuergerät (23) zugeordnet und aufeinander abgestimmt freigebbar sind,
**dadurch gekennzeichnet,**
**dass** das Zusatzeinspritzventil (17) derart ausgebildet und/oder angeordnet ist, dass das Zusatzeinspritzventil (17) den Kraftstoff (19) im wesentlichen in einer Richtung quer zu der Luftströmungsrichtung (16) im Ansaugrohr (13) einspritzt.

2. Kraftstoffzuführsystem nach Anspruch 1,
**dadurch gekennzeichnet,**
**dass** eine Einspritzdüse des Zusatzeinspritzventils (17) derart ausgebildet ist, dass das Zusatzeinspritzventil den Kraftstoff im wesentlichen in einer Richtung quer zu der Luftströmungsrichtung im Ansaugrohr (13) einspritzt.

3. Kraftstoffzuführsystem nach Anspruch 1 oder 2,
**dadurch gekennzeichnet,**
**dass** das Zusatzeinspritzventil (17) bezüglich des Ansaugrohres (13) derart orientiert ist, dass das Zusatzeinspritzventil den Kraftstoff im wesentlichen in einer Richtung quer zu der Luftströmungsrichtung im Ansaugrohr (13) einspritzt.

4. Kraftstoffzuführsystem nach einem der Ansprüche 1 bis 3,
**dadurch gekennzeichnet,**
**dass** pro Zylinder (4) der Brennkraftmaschine jeweils ein Zusatzeinspritzventil (17) vorgesehen ist (Multipoint-Einspritzung).

5. Kraftstoffzuführsystem nach einem der Ansprüche 1 bis 3,
**dadurch gekennzeichnet,**
**dass** für mehrere Zylinder (4) der Brennkraftmaschine ein gemeinsames Zusatzeinspritzventil (17) vorgesehen ist (Singlepoint-Einspritzung).
